# EUROPEAN PATENT APPLICATION

(11) **EP 3 358 852 A1**
(43) Date of publication of application: **08.08.2018**
(21) Application number: 17154672.4
(22) Date of filing: 03.02.2017
(51) Int. Cl.: H04N 21/4728, H04N 21/439, H04N 21/218, H04N 21/2368, H04N 21/422, H04N 21/4223, H04N 21/472, H04N 21/81, H04N 5/222

(54) **INTERACTIVE MEDIA CONTENT ITEMS**

(71) Applicant: Nagravision SA, 1033 Cheseaux-sur-Lausanne (CH)
(72) Inventor: WENDLING, Bertrand, 1033 Cheseaux-sur-Lausanne (CH); SARDA, Pierre, 1033 Cheseaux-sur-Lausanne (CH)
(74) Representative: Korenberg, Alexander Tal

(57) **Abstract**

A system and method for creating an interactive media content item and a system and method for outputting the interactive media content item are disclosed. The interactive media content item comprises a video stream and a plurality of audio streams. The video stream is captured by a camera having a field of view, and each audio stream is associated with a respective portion of the field of view of the camera.

## Description

### FIELD

The present disclosure relates to interactive media content items. More particularly, but not exclusively, the present disclosure relates to a system and method for creating interactive media content items comprising a plurality of audio streams which may be individually selected for output, and a system and method for outputting interactive media content items.

### BACKGROUND

Media content items, such as television programs and movies, are generally available with a video stream and one or more associated audio streams. Generally, the audio streams are a mixture of sounds from different sources arranged at respective levels to enable a user to hear the sounds from a scene in the video stream as a whole. For example, an audio stream of a media content item comprising a recording of an orchestra concert may have the sound levels of the different recorded instruments balanced such that the audio stream is representative of what would be heard in the concert hall.

### BRIEF DESCRIPTION OF THE DRAWINGS

Exemplary embodiments of the disclosure shall now be described with reference to the drawings in which:
Figure 1 illustrates an environment in which creation of an interactive media content item is taking place;
Figure 2 illustrates a system for creating an interactive media content item;
Figure 3 illustrates a flow chart of a method of creating an interactive media content item;
Figure 4 illustrates an environment in which an interactive media content item is output;
Figure 5 illustrates system for outputting an interactive media content item;
Figure 6 illustrates a flow chart of a method of outputting an interactive media content item;
Figure 7 illustrates a flow chart of a further method of outputting an interactive media content item; and
Figure 8 illustrates a block diagram of one implementation of a computing device.

### DETAILED DESCRIPTION OF THE DRAWINGS

In overview, a system and method for creating an interactive media content item and a system and method for outputting the interactive media content item are disclosed. The interactive media content item comprises a video stream and a plurality of audio streams. The video stream is captured by a camera having a field of view, and each audio stream is associated with a respective portion of the field of view of the camera.

In some aspects of the disclosure a method comprises creating an interactive media content item. The method comprises receiving a video stream, wherein the video stream is captured by a camera having a field of view. The method comprises receiving a plurality of audio streams. Each audio stream originates from a respective region within the field of view of the camera, for example from a person or musical instrument in the region. The sound may originate from any other object or subject making a sound within the region of the field of view of the camera such as an animal, a car, etc.

The method comprises associating each audio stream with a respective portion of the field of view of the camera. Each respective portion corresponds to a region within the field of view of the camera from which the associated audio stream originates. The associations may be embedded in the interactive media content item, or the associations may be stored separately from the interactive media content item for retrieval when required.

The method may comprise creating a combined audio stream, the combined audio stream being a mixture of the audio streams received from the respective region within the field of view of the camera, each at respective volume levels, to provide an audio stream corresponding to the sound perceived by a listener listening to sound from the scene in the field of view. The combined audio stream may be the default audio stream when the interactive media content item is output.

Advantageously, as a result of creating the interactive media content item in this way, audio originating from a given region of the field of view can be selectively played back to a user by selection of the corresponding field of view portion. This enables the user to listen to individual sources of sound within the field of view of the video stream. Enabling the user to focus on a desired portion of the "soundscape" provide a richer interactive media experience and, in particular, a more customisable and immersive listening experience.

Further aspects of the disclosure relate to a non-transitory computer readable medium having computer-executable instructions to cause a computer system to perform the method. Further aspects of the disclosure relate to a system for creating an interactive media content item, the system comprising a processor arranged to perform the method.

In some aspects there is provided a system, for example an information appliance such as a set top box, for outputting an interactive media content item having a plurality of audio streams and a video stream, wherein the video stream is captured by a camera having a field of view, and each audio stream is associated with a respective portion of the field of view of the camera. The system comprises a receiver arranged to receive, from a content provider, at least the video stream of the interactive media content item. The system further comprises a processor configured to cause the video stream to be displayed on a display and to receive, from a user input, a selection of one of the audio streams. As described below, the selection can be explicitly in terms of the audio stream or a description of it, or may be implicit, for example in terms of a selection of a portion of the field of view. The processor is further configured to, in response to receiving the selection, cause the selected audio stream to be audibly (for a viewer of the video stream) output, or cause an increase in a volume setting of the selected audio stream relative to one or more other audio streams being audibly output. The relative volume may be increased by increasing the volume of the selected audio stream and/or decreasing the volume of the one or more other audio streams.

Receiving the selection of one of the audio streams may comprise receiving a selection of a portion of the field of view of camera, for example based on a pointer location on the display or based on a zoomed-in portion of the field of view of camera in the display. For example, the user may move a pointer or cursor on a screen displaying the field of view using a remote control or other input means to make the selection, or the user may zoom-in on a source of sound within the field of view of the video stream to make the selection. Receiving the selection may instead comprise receiving a user selection of respective menu items corresponding to the audio streams, for example from a displayed list of the audio streams or graphical screen elements representing the audio streams. The selection may be on-screen or using a numeric key pad, for example, a remote control.

The processor may be configured to determine which audio stream of the plurality of audio streams is associated with the selected portion of the field of view. Where the system is an information appliance, this determination may be made remotely, that is the information appliance may send an identification of the selected portion of the field of view to a remote server, for example the content provider, and the remote server may return an identifier of the associated audio stream for retrieval of the audio stream by the information appliance, or may return the audio stream itself. Of course, the system may be distributed in some embodiments and the determination made remotely as part of a distributed system / processor.

The processor may be configured to send, to the content provider, a request for the selected audio stream and receive, from the content provider, the selected audio stream. The request may comprise an identifier of the selected audio stream or of the selected portion of the field of view, as the case may be. Advantageously, by receiving the selected audio stream on request, the considerable bandwidth requirement that would be associated with sending all of the audio streams in advance may be alleviated. In embodiments where the processor is configured to cause an increase in a volume setting of the selected audio stream relative to one or more other audio streams being audibly output, the processor may be arranged to initially receive and output a combined audio stream comprising a mixture of the audio streams received from the respective region within the field of view of the camera. In response to receiving the selection, the processor may cause output of the selected audio steam and optionally reduce the volume setting or cease output of the combined audio stream.

However, in some embodiments all audio streams are received by the system prior to a selection of an audio stream, for example with the video stream, which advantageously may reduce latency once a selection is made. In embodiments where the processor is configured to cause an increase in a volume setting of the selected audio stream relative to one or more other audio streams being audibly output, the processor may be arranged to initially output all of the plurality of audio streams, and in response to receiving the selection, cause an increase in the volume setting of the selected audio stream and/or a reduction in the volume setting of one, some or all of the other audio streams.

For example, the system may receive the video stream together with an audio stream corresponding to the overall scene or field or view. In response to the user input, the system sends a request to receive the audio stream associated with the selected portion, for example sending an audio stream identifier or an identifier of the selected portion of the field of view to the content provider and receiving the corresponding audio stream.

In either type of embodiment, i.e. receiving all or only a selected one of the plurality of audio streams, a determination of the audio stream corresponding to the selected portion of the field of view may be made by the processor located locally, for example in the information appliance or set top box, or remotely, for example at the content provider. In the former case, the content provider may receive an identifier of the selected audio stream to return the selected audio stream, for example, and in the latter case an identifier of the selected portion of the field of view, either to return an identifier of the selected audio stream or the selected audio stream.

In some embodiments, the processor is configured to cause the video stream to be displayed zoomed in on the selected portion. This provides a convenient way for the user to focus on the video corresponding to the audio stream the user has indicated he or she wishes to focus on. Zooming may be caused by the selection of the audio stream without further user input or may require an additional user input, on-screen or otherwise, indicating that the user wishes to zoom in on the source of the selected audio stream.

Further aspects of the disclosure relate to a method of outputting an interactive media content item having a plurality of audio streams and a video stream, and a non-transitory computer readable medium having computer-executable instructions to cause a computer system to perform the method of outputting the interactive media content item.

Some specific embodiments are now described by way of illustration with reference to the accompanying drawings in which like reference numerals refer to like features.

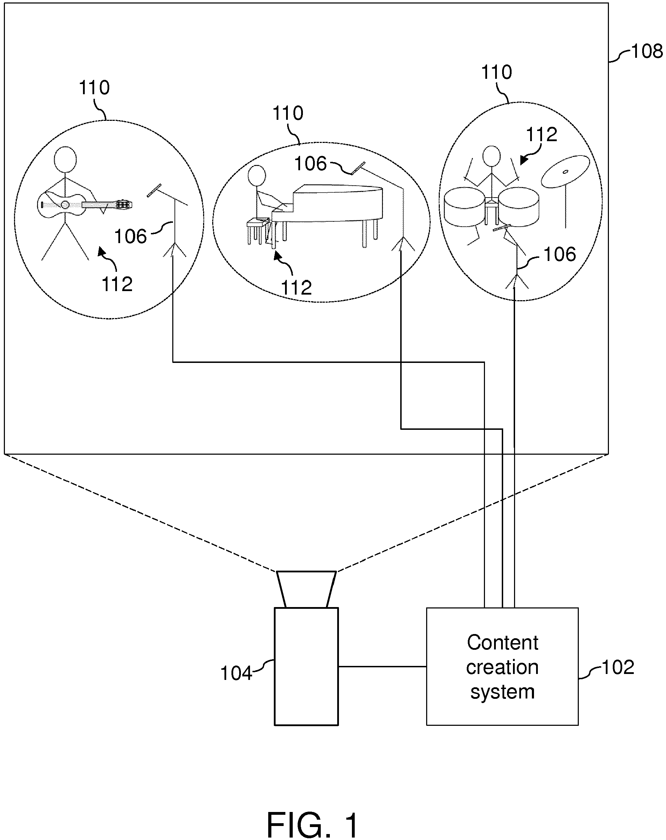

With reference to Figure 1, a content creation system 102 is connected to each of a camera 104 and a plurality of microphones 106. The camera 104 has a field of view 108, and is arranged to receive a video stream of the field of view 108, and sends the video stream to the content creation system 102. In some embodiments, the camera 104 is a virtual camera, which may comprise a plurality of physical cameras, arranged to send a video stream of a 3D virtual world to the content creation system 102.

Within the field of view 108 is a plurality of regions 110, and each region corresponds to the source of a sound. In other words, an audio stream originates from each region 110. In the example of Figure 1, the source of the sound in each region 110 is a musician 112 playing a musical instrument. In other examples, the source of the sound is any object arranged to create sound.

Each microphone 106 is arranged to capture an audio stream of the sound in a respective region 110. Accordingly, the content creation system 102 receives a plurality of audio streams. It is to be understood that instead of a microphone 106, any suitable means can be used to obtain the audio stream from a region 110, such as a pickup for a stringed instrument. Further, each region 110 may comprise more than one source of sound such that one microphone 106 is used to capture the sound from a plurality of sources. Each audio stream may correspond to the signal from a respective microphone, or to a mixture of the signals from two or more microphones and may be derived from the one or more microphone signals using suitable signal processing.

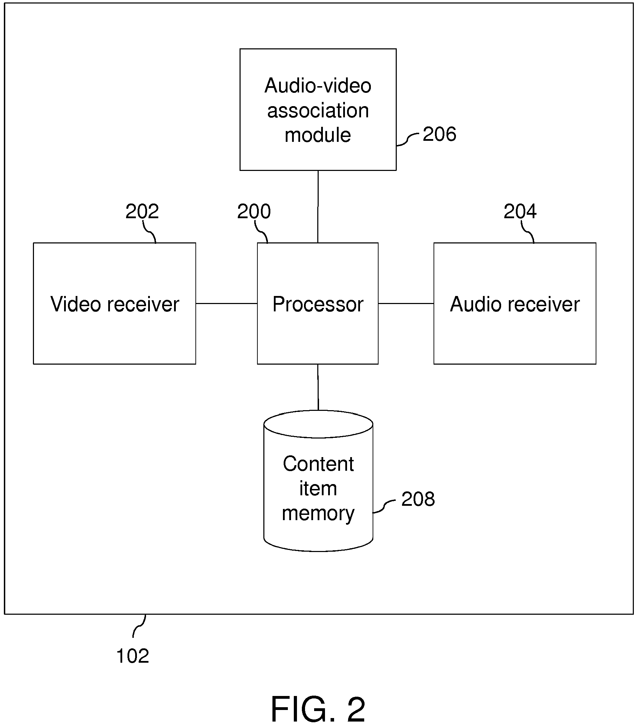

With reference to Figure 2, the content creation system 102 comprises a processor 200, a video receiver 202, an audio receiver 204, an audio-video association module 206 and a content item memory 208. The video receiver 202 is arranged to receive a video stream from the camera 104, and the audio receiver 204 is arranged to receive each audio stream from the plurality of microphones 106.

The audio-video association module 206 is arranged to associate each audio stream with a respective portion of the field of view 108. Each respective portion is based on the respective region 110 from which the corresponding audio stream originates. The processor 200 is configured to coordinate between the video receiver 202, the audio receiver 204, the audio-video association module 206 and the content item memory 208 to create interactive media content items each comprising a video stream, a plurality of audio streams and the association of each audio stream with a respective portion of the field of view 108. Each portion may be the same as its corresponding region 110, or may comprise part of its corresponding region 110. The content item memory 208 is arranged to store interactive media content items that have been created by the content creation system 102.

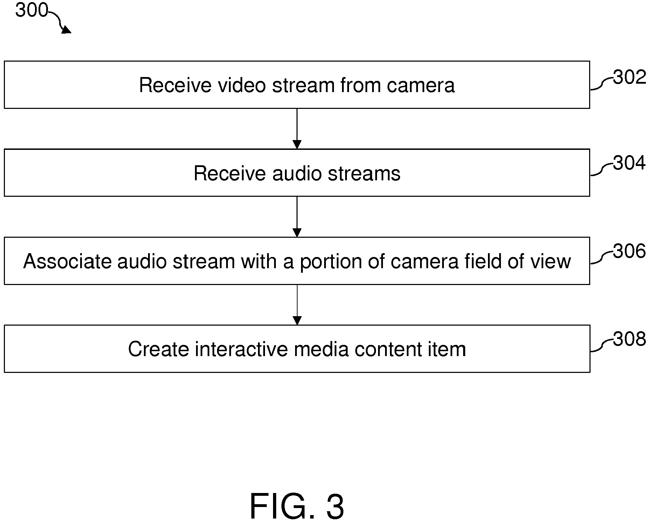

A method 300 of creating an interactive media content item is now described with reference to Figure 3. At step 302, the video receiver 202 receives a video stream from the camera 104. At step 304, the audio receiver 204 receives a plurality of audio streams. At step 306, the audio-video association module 206 associates each audio stream with a respective portion of the field of view 108. For example, the step 306 of associating may comprise a user providing information to the audio-video association module 206 regarding pixels in the field of view 108 corresponding to each portion. At step 308, the processor 200 creates the interactive media content item by combining the video stream received at step 302, the plurality of audio streams received at step 304 and the associations between each audio stream and a respective portion of the field of view 108. In other words, the associations are embedded in the interactive media content item. The created interactive media content item may then be stored in the content item memory 208. In some embodiments, the associations are not embedded into the interactive media content item, and are stored separately in the content item memory 208. The associations may be implicit or explicit. For example, the content item memory 208 may contain a database in which data identifying each portion is stored in association with the respective audio stream.

In some embodiments, a combined audio stream is created by the processor 200 of the content creation system 102 as one of the plurality of audio streams, the combined audio stream being a mixture of the audio received from the plurality of microphones 106 each at respective volume levels, to provide an audio stream corresponding to the sound perceived by a listener listening to sound from the scene in the field of view. The combined audio stream may be a combination of individual streams being transmitted, or a different mix of the signals from the different audio sources. The combined audio stream may be the default audio stream when the interactive media content item is output.

Interactive media content items may be supplied to a content provider for distribution to information appliances for playback to a user, for example, using an information appliance, such as a set top box. Interactive media content items may be received from a plurality of sources, for example, the video and combined audio stream may be received as a digital broadcast, together with an indication of the portions of the field of view and/or an indication of the corresponding audio stream. Alternatively, either or both these indications can be received over an internet connection. In either case, the individual audio streams may be received all at once together with the video and combined audio stream, either by digital broadcast or over an internet connection, or may be received selectively over an internet or other point to point connection. Of course, all of the above components may be received over an internet or other point to point connection.

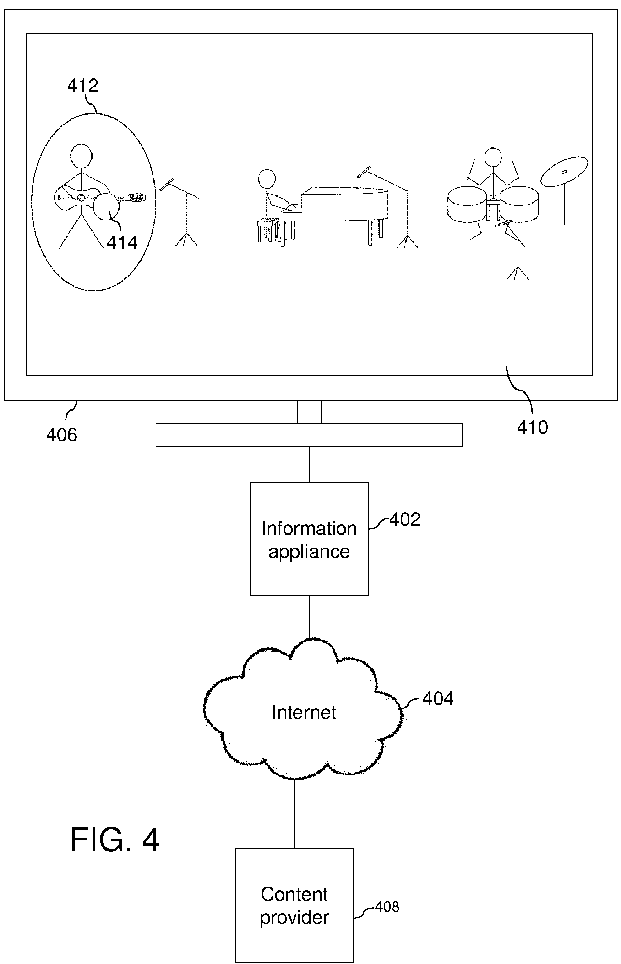

With reference to Figure 4, an information appliance 402 is connected to each of the internet 404, a display and speaker device 406, e.g. a television or a virtual reality headset. The information appliance 402, for example, a set-top box (STB) for a television, is arranged to output interactive media content items. In some embodiments, the information appliance may comprise an integrated display device, for example in the case of a smart television.

The information appliance 402 receives interactive media content items from the internet 404. For example, a content provider 408 is connected to the internet 404, and the information appliance 402 may be arranged to connect to the content provider 408 via the internet 404. In some embodiments, the information appliance 402 is arranged to receive interactive media content items in the form of digital and/or analogue broadcast signals, for example over the air broadcast signals, satellite television signals, or cable television signals and may comprise one or more corresponding receiver(s). It is to be understood that in some embodiments, the information appliance 402 may receive interactive media content items from other sources, such as optical media including a LaserDisc, a DVD, an HD DVD, or a Blu-ray disc, or from a data storage device including a USB flash drive, a hard disc drive or a solid state drive and may comprise one or more corresponding reader(s).

The display and speaker device 406 is arranged to output media content items from the content provider 408. In the example of Figure 4, an interactive media content item of a musical band performance is output on the display and speaker device 406 such that the video stream of the interactive media content item is displayed on the display and speaker device 406. The view 410 of the video stream displayed on the display and speaker device 406 may substantially correspond to the field of view 108 of the camera 104 that recorded the video stream.

A user can indicate a selection 412 of a portion of the field of view 410. For example, the user may indicate the selection 412 using a pointer 414, such as a mouse cursor or remote control unit pointer to select the selection 412. In some embodiments, the user may indicate the selection 412 based on a selection from a set of menu items corresponding to the plurality of audio streams. For example, the information appliance 402 may be arranged to cause the display and speaker device 406 to display a menu comprising a set of menu items corresponding to the plurality of audio streams such that the user can select the desired menu item to indicate a selection of an audio stream. The information appliance 402 is arranged to, in the event that the user indicates a selection 412, cause the display and speaker device 406 to audibly output the audio stream associated with the selection 412.

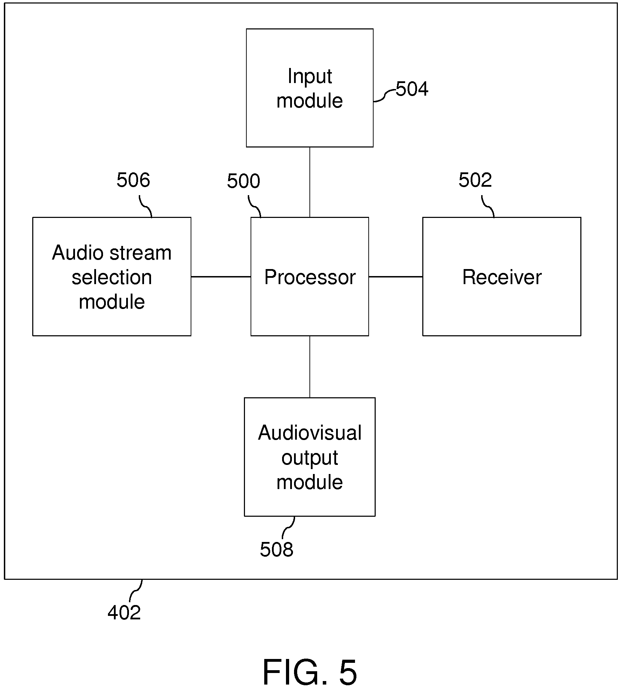

With reference to Figure 5, the information appliance 402 comprises a processor 500, a receiver 502, an input module 504, an audio stream selection module 506, and an audio-visual output module 508. The receiver 502 is arranged to receive interactive media content items from the content provider 408 via internet 404 or broadcast signals. The audio-visual output module 508 is arranged to output interactive media content items to the display and speaker device 406.

The input module 504 is arranged to receive an indication 414 of a selection 412 of a portion of the field of view 410 from the user. The audio stream selection module 506 is arranged to receive the selection 412 from the input module 504 and determine which audio stream of the plurality of audio streams of an interactive media content item being output is associated with the selection 412. In some embodiments, the audio stream selection module 506 is arranged to send a request to a remote system, so that the remote system can determine which audio stream of the plurality of audio streams of an interactive media content item being output is associated with the selection 412. The processor 500 is configured to coordinate between the receiver 502, the input module 504, the audio stream selection module 506, and the audio-visual output module 508.

In some embodiments, the audio-visual output module 508 is arranged to zoom in on the region in the video stream corresponding to the audio stream associated with the selected portion, and cause the display and speaker device 406 to display the zoomed in video stream.

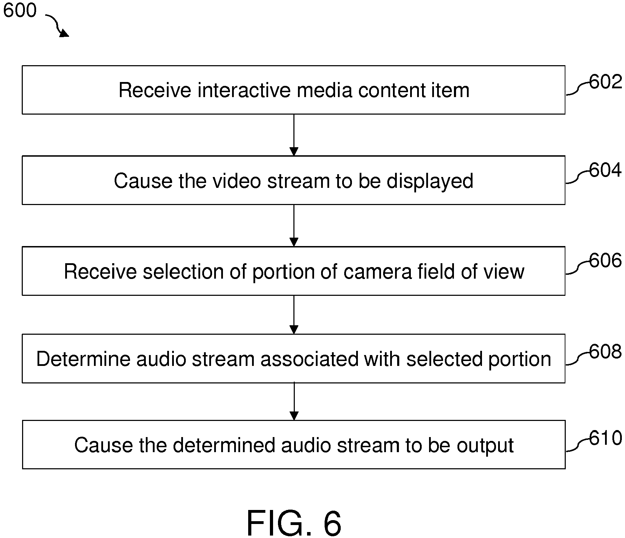

The information appliance 402 can receive the interactive media content item including the video stream and each of the plurality of audio streams, for example when the interactive media content item is broadcast to the information appliance 402. A benefit of this is that the information appliance 402 does not require a two way data connection with the content provider 408. A method 600 of outputting an interactive media content item when the whole interactive media content item is received is described with reference to Figure 6.

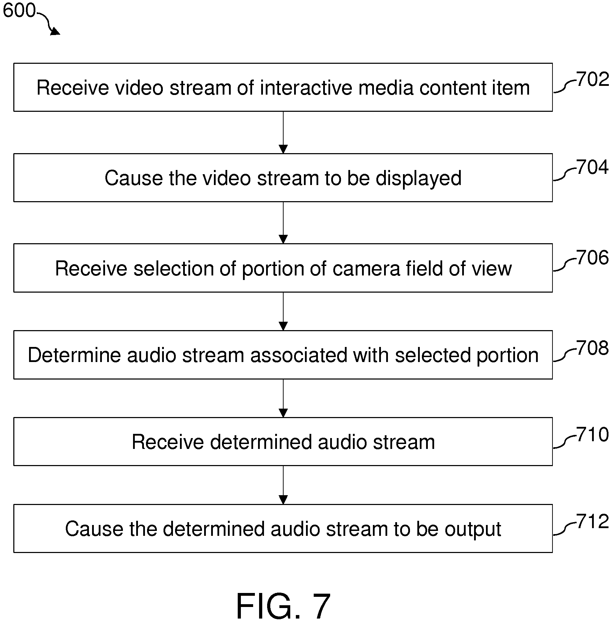

Alternatively, the information appliance 402 can receive the video stream of the interactive media content item with, for example, the combined audio stream only, rather than the plurality of audio streams, and receive one of the plurality of audio streams once a user selection has been made. A benefit of this is to reduce the amount of data that the content provider 408 initially supplies to the information appliance 402. A method 700 of outputting an interactive media content item when at least the video stream of the interactive media content item is initially received is described with reference to Figure 7.

With reference to Figure 6, at step 602, the receiver 502 receives the interactive media content item comprising a video stream and a plurality of audio streams. In some embodiments, the interactive media content includes the combined audio stream. At step 604, the audio-visual output module 508 causes the video stream to be displayed on the display and speaker device 406. Optionally, the audio-visual output module 508 causes one or more of the plurality of audio streams, or the combined audio stream if available, to be audibly output by the display and speaker device 406 at step 604.

At step 606, the input module 504 receives an indication 414 of a selection of a portion of the field of view 410, and determines that the indication 414 relates to the portion 412. For example, a step 606, the input module 504 may receive an indication from a pointer on a display or a selection from a set of menu items as described above. At step 608, the audio stream of the plurality of audio streams associated with the user-selected portion 412 of the view 410 is determined. The determination at step 608 is based on the associations between each audio stream and their respective portion of the field of view 108 of the camera 104 stored in the interactive media content item. Step 608 may be carried out locally at the information appliance by the audio stream selection module 506. In other embodiments, step 608 comprises the audio stream selection module 506 sending a request to a remote system, such as the content provider, to carry out the determination of which audio stream is associated with the user-selected portion 412. The request includes an identifier of the selected portion of the field of view.

At step 610, the audio-visual output module 508 causes the audio stream determined at step 608 to be audibly output by the display and speaker device 406 (when the determined audio stream was not previously output), or cause an increase in a volume setting of the selected audio stream relative to one or more other audio streams being audibly output. If, at step 604, one or more of the plurality of audio streams is output by the display and speaker device 406, step 610 may comprise causing an increase in the volume setting of the selected audio stream and/or a reduction in the volume setting of the other audio streams.

The method 700 of outputting an interactive media content item when at least the video stream of the interactive media content item is initially received is now described in detail. With reference to Figure 7, at step 702, the receiver 502 receives the video stream of an interactive media content item from the content provider 408. At step 704, the audio-visual output module 508 causes the video stream to be displayed on the display and speaker device 406. In some embodiments, the receiver 502 may also receive one audio stream, for example a combined audio stream of the overall sound from the field of view or one of the plurality of audio streams, and the audio-visual output module 508 causes the received audio stream to be audibly output but the display and speaker device 406.

At step 706, the input module 504 receives an indication 414 of a portion of the field of view 410, and determines that the indication 414 relates to the selected portion 412. For example, a step 706, the input module 504 may receive an indication from a pointer on a display or a selection from a set of menu items as described above. At step 708, the audio stream associated with the selected portion 412 of the view 410 is determined. The determination at step 708 is based on the associations between each audio stream and their respective portion of the field of view 108 of the camera 104 stored in the interactive media content item. Step 708 may be carried out locally at the information appliance by the audio stream selection module 506. In other embodiments, step 708 comprises the audio stream selection module 506 sending a request to a remote system, such as the content provider, to carry out the determination of which audio stream is associated with the user-selected portion 412. The request includes an identifier of the selected portion of the field of view.

At step 710, the receiver 502 receives the audio stream determined at step 708 from the content provider 408. Step 710 may comprise sending a request for the determined audio stream to content provider 408. The request may identify video stream and the selected portion of the field of view, or may identify the associated audio stream. The content provider 408, in these embodiments, comprises server infrastructure storing the audio streams in association with identifiers identifying the audio streams or the associated video stream and portions of the field of view, as the case may be. The server infrastructure processes the request to retrieve the audio stream and sends it to the information appliance, for example over an internet connection. In embodiments where the step 708 is carried out remotely at the service provider, steps 708 and 710 may be combined, that is the information appliance 402 sends a request comprising an identification of the selected portion of the field of view to the content provide, which returns the associated audio stream to the information appliance 402.

At step 712, the audio-visual output module 508 causes the audio stream received at step 710 to be audibly output by the display and speaker device 406, or causes an increase in a volume setting of the selected audio stream relative to one or more other audio streams being audibly output. If, at step 704, the one received audio stream, for example the combined audio stream, is output by the display and speaker device 406, step 712 may comprise causing output of the selected audio stream and optionally reducing the volume setting or ceasing output of the one received audio stream.

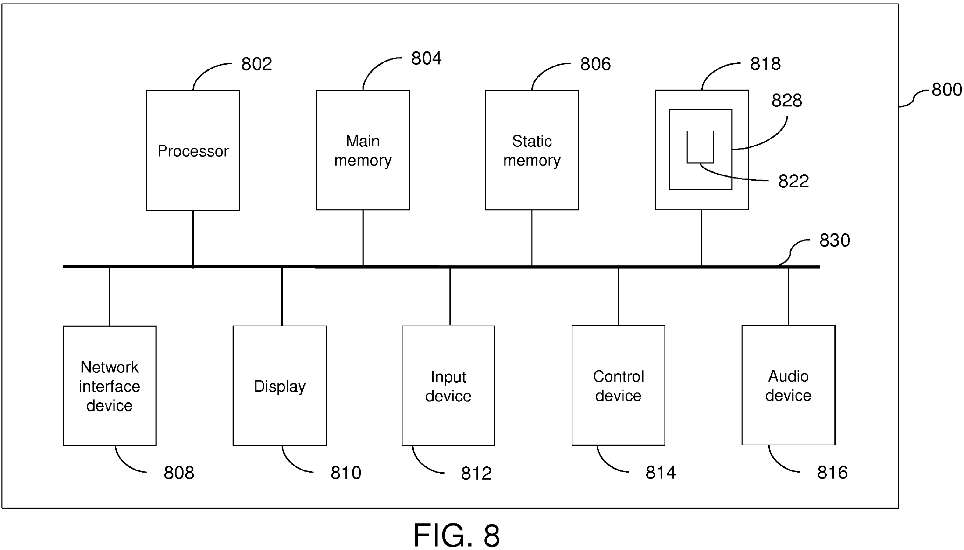

Figure 8 illustrates a block diagram of one implementation of a computing device 800, for example implementing an information appliance 100 as described above, within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 800 includes a processing device 802, a main memory 804 (e.g., read-only memory (ROM), flash memory, dynamic random access memory (DRAM) such as synchronous DRAM (SDRAM) or Rambus DRAM (RDRAM), etc.), a static memory 806 (e.g., flash memory, static random access memory (SRAM), etc.), and a secondary memory (e.g., a data storage device 818), which communicate with each other via a bus 830.

Processing device 802 represents one or more general-purpose processors such as a microprocessor, central processing unit, or the like. More particularly, the processing device 802 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 802 may also be one or more special-purpose processing devices such as an application specific integrated circuit (ASIC), a field programmable gate array (FPGA), a digital signal processor (DSP), network processor, or the like. Processing device 802 is configured to execute the processing logic (instructions 822) for performing the operations and steps discussed herein.

The computing device 800 may further include a network interface device 808. The computing device 800 also may include a video display unit 810 (e.g., a liquid crystal display (LCD) or a cathode ray tube (CRT)), an alphanumeric input device 812 (e.g., a keyboard or touchscreen), a control device 814 (e.g., a mouse or touchscreen), and an audio device 816 (e.g., a speaker).

The data storage device 818 may include one or more machine-readable storage media (or more specifically one or more non-transitory computer-readable storage media) 828 on which is stored one or more sets of instructions 822 embodying any one or more of the methodologies or functions described herein. The instructions 822 may also reside, completely or at least partially, within the main memory 804 and/or within the processing device 802 during execution thereof by the computer system 800, the main memory 804 and the processing device 802 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein (for example, the video receiver 202, the audio receiver 204 or an audio-video association module 206 described in relation to Figure 2, or the receiver 502, the input module 504, the audio stream selection module 506, or the audio-visual output module 508 described in relation to Figure 5) can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing", "identifying", "sending", "causing", "associating" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for creating an interactive media content item, the method comprising:
receiving a video stream, wherein the video stream is captured by a camera having a field of view;
receiving a plurality of audio streams, wherein each audio stream originates from a respective region within the field of view of the camera; and
associating each audio stream with a respective portion of the field of view of the camera, wherein each respective portion corresponds to a region within the field of view of the camera from which the associated audio stream originates.

2. The method of Claim 1, wherein each region within the field of view comprises an object, wherein the object is the source of the audio stream.

3. A system for creating an interactive media content item, the system comprising a processor arranged to:
receive a video stream, wherein the video stream is captured by a camera having a field of view;
receive a plurality of audio streams, wherein each audio stream originates from a respective region within the field of view of the camera; and
associate each audio stream with a respective portion of the field of view of the camera, wherein each respective portion corresponds to a region within the field of view of the camera from which the associated audio stream originates.

4. A method of outputting an interactive media content item having a plurality of audio streams and a video stream, wherein the video stream is captured by a camera having a field of view, and each audio stream is associated with a respective portion of the field of view of the camera, the method comprising:
receiving, from a content provider, at least the video stream of the interactive media content item;
causing the video stream to be displayed on a display;
receiving, from a user input, a selection of one of the audio streams; and
in response to receiving the selection, causing the selected audio stream to be audibly output, or causing an increase in a volume setting of the selected audio stream relative to one or more other audio streams being audibly output.

5. The method of Claim 4, wherein receiving the selection of one of the audio streams comprises receiving a selection of a portion of the field of view of camera.

6. The method of Claim 5, wherein receiving the selection of the portion of the field of view of the camera comprises receiving a selection of a portion of the field of view of the camera from the user input based on a pointer location on the display.

7. The method of Claim 6, comprising determining which audio stream of the plurality of audio streams is associated with the selected portion of the field of view.

8. The method of any of Claims 4 to 7, comprising:
sending, to the content provider, a request for the selected audio stream; and
receiving, from the content provider, the selected audio stream.

9. The method of any of Claims 4 to 8, comprising causing the video stream to be displayed zoomed in on the selected portion.

10. A system for outputting an interactive media content item having a plurality of audio streams and a video stream, wherein the video stream is captured by a camera having a field of view, and each audio stream is associated with a respective portion of the field of view of the camera, the system comprising:
a receiver arranged to receive, from a content provider, at least the video stream of the interactive media content item; and
a processor configured to:
cause the video stream to be displayed on a display;
receive, from a user input, a selection of one of the audio streams; and
in response to receiving the selection, cause the selected audio stream to be audibly output, or cause an increase in a volume setting of the selected audio stream relative to one or more other audio streams being audibly output.

11. The system of Claim 10 comprising an audio-visual output module arranged to cause the video stream to be displayed on a display.

12. The system of any of Claims 10 or 11 comprising an input module arranged to receive a selection of one of the audio streams.

13. The system of any of Claims 10 to 12 comprising an audio stream selection module arranged to, in response to receiving the selection, cause the selected audio stream to be audibly output, or cause an increase in a volume setting of the selected audio stream relative to one or more other audio streams being audibly output.

14. The system of any of Claims 10 to 13, wherein the processor is configured to carry out the method of any of Claims 4 to 9.

15. A non-transitory computer readable medium having computer-executable instructions that, when executed on a computer system, implement the method of any of Claims 1, 2 and 4 to 9.
